# FASCICULE DE BREVET EUROPEEN

(11) **EP 4 203 116 B1**
(45) Date de publication et mention de la délivrance du brevet: **10.07.2024**
(21) Numéro de dépôt: 22215504.6
(22) Date de dépôt: 21.12.2022
(51) Int. Cl.: H01M 8/0204, H01M 8/0258, H01M 8/0286, H01M 8/10

(54) **PROCÉDÉ DE FABRICATION D'UN GUIDE D'ÉCOULEMENT POUR RÉACTEUR ÉLECTROCHIMIQUE**
VERFAHREN ZUR HERSTELLUNG EINES STRÖMUNGSLEITERS FÜR EINEN ELEKTROCHEMISCHEN REAKTOR
METHOD FOR MANUFACTURING A FLOW GUIDE FOR AN ELECTROCHEMICAL REACTOR

(30) Priorité: 23.12.2021 FR 2114394
(43) Date de publication de la demande: 28.06.2023
(73) Titulaire: Commissariat à l'énergie atomique et aux énergies alternatives, 75015 Paris (FR)
(72) Inventeur: VINCENT, Rémi, 38054 GRENOBLE Cedex 09 (FR); TREMBLAY, Denis, 38054 GRENOBLE Cedex 09 (FR)
(74) Mandataire: Hautier IP

(56) Documents cités:
- EP-A1- 2 197 066
- US-A1- 2005 123 817
- US-A1- 2020 083 551

## Description

### DOMAINE TECHNIQUE

La présente invention concerne l'optimisation de la fabrication d'au moins un composant d'un réacteur électrochimique tel qu'une pile à combustible. Elle concerne plus particulièrement la réalisation de circuits fluidiques dans le cadre de la fabrication de cellules électrochimiques notamment destinées à une utilisation en pile à combustible, et en particulier à une utilisation en pile à combustible de température inférieure à 250°C.

### ETAT DE LA TECHNIQUE

Les piles à combustible sont par exemple envisagées comme système d'alimentation électrique pour des véhicules automobiles destinés à être produits à grande échelle dans le futur, ainsi que pour un grand nombre d'autres applications. Une pile à combustible est un dispositif électrochimique qui convertit de l'énergie chimique directement en énergie électrique. Un combustible tel que du dihydrogène ou du méthanol est utilisé comme carburant de la pile à combustible.

Les piles à combustible à membrane d'échange de protons, dites PEM, fonctionnent à basse température, typiquement inférieure à 250°C et présentent des propriétés de compacité particulièrement intéressantes.

### Principe de la pile à combustible

La pile à combustible est un générateur électrochimique qui permet de convertir de l'énergie chimique en énergie électrique par une réaction d'oxydo-réduction.

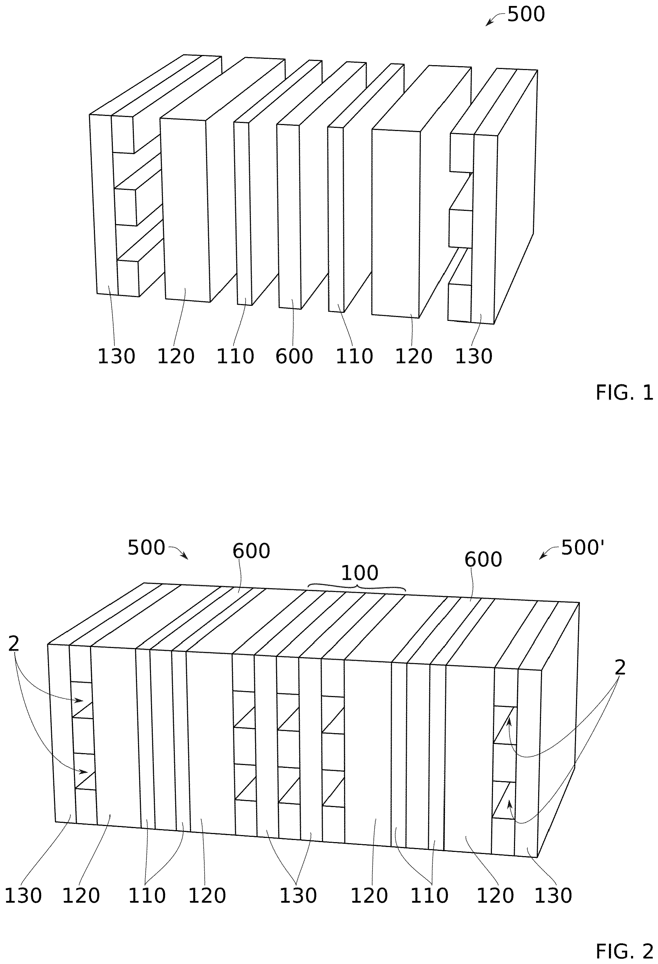

En référence à la figure 1 annexée, le coeur électrochimique 500 de la pile est constitué de deux électrodes 110 séparées par une membrane échangeuse d'ions 600. Les électrodes 110 sont alimentées d'un réactif approprié, respectivement un combustible pour l'anode et un comburant pour la cathode, créant ainsi une réaction électrochimique à la surface des électrodes 110 qui va permettre de générer le courant électrique.

En référence à la figure 2, la pile à combustible peut être constituée d'un empilement de coeurs électrochimiques 500, 500' montés en série appelé « stack ». Entre chaque empilement de coeurs électrochimiques 500, 500' peut être constituée une plaque bipolaire 100 pour permettre d'alimenter les électrodes 110 en réactifs. La pile à combustible peut donc être constituée d'un empilement de cellules unitaires séparées deux à deux par une plaque bipolaire 100.

Plus particulièrement, une pile à combustible à membrane échangeuse de protons ou PEMFC (de l'acronyme anglo-saxon « Proton Exchange Membrane Fuel Cell ») comprend au moins une cellule unitaire contenant un assemblage membrane-électrodes ou AME (110/600/110), constitué d'une membrane électrolytique 600 permettant le passage sélectif des protons et, de part et d'autre de cette membrane 600, les électrodes 110.

La membrane 600 est généralement constituée d'un ionomère perfluorosulfoné tel que le Nation^{®}. Les électrodes 110, également appelées couches catalytiques ou actives, contiennent un catalyseur, avantageusement du platine (Pt), supporté par du carbone, et éventuellement un ionomère, en général le même que celui constituant la membrane 600.

Au niveau de l'anode, du dihydrogène (H2), utilisé comme carburant, est oxydé pour produire des protons traversant la membrane 600. Les électrons produits par cette réaction migrent vers le circuit fluidique, puis traversent un circuit électrique externe à la cellule 500 pour former un courant électrique. Au niveau de la cathode, de l'oxygène (O2) est réduit et réagit avec les protons ayant traversé la membrane 600 pour former de l'eau.

Des couches de diffusion gazeuse 120 ou GDL (de l'acronyme anglo-saxon « Gaz Diffusion Layer»), classiquement en fibres de graphite, peuvent être interposées entre les électrodes 110 et les plaques bipolaires 100.

### Principe d'une plaque bipolaire

La plaque bipolaire 100 assure plusieurs fonctions, parmi lesquelles notamment :
- la distribution des réactifs et l'évacuation des sous-produits formés, possiblement via des canaux 2 et/ou orifices ménagés en son sein;
- le transfert des électrons générés au niveau des anodes des différentes cellules unitaires 500, ce qui implique que la plaque bipolaire 100 soit électriquement conductrice ;
- le refroidissement des cellules unitaires 500, possiblement via la circulation d'un liquide de refroidissement en son sein ;
- un support mécanique pour le coeur électrochimique 500.

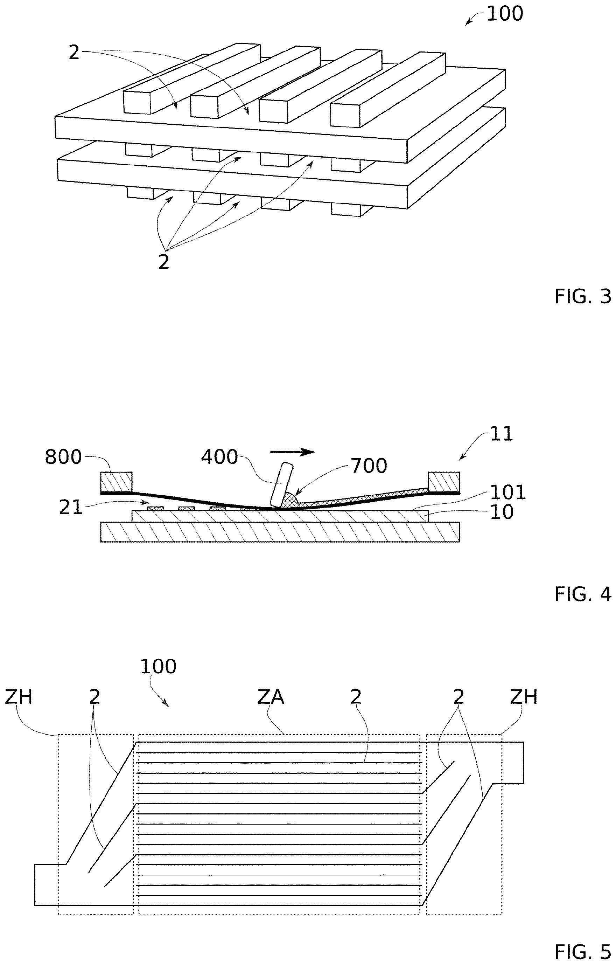

On peut considérer le cas typique d'une plaque bipolaire 100 telle qu'illustrée sur la figure 3 comprenant trois circuits fluidiques, dédiés respectivement au guidage des écoulements de fluide anodique, de fluide cathodique et de fluide de refroidissement (au centre de la plaque). Le guidage des écoulements est réalisé via la mise en place d'obstacles, appelées ci-dessous nervures ou dents, comme des parois ou des plots, qui influent sur l'écoulement du fluide. Ces nervures peuvent prendre la forme, par exemple, d'un faisceau de canaux 2 parallèles, que l'on nomme ici « circuit fluidique ». Ces nervures réalisant la connexion électrique et thermique avec le coeur de pile, elles doivent être conducteurs électriques.

Chaque circuit fluidique d'une pile à combustible est généralement constitué d'un matériau conducteur de courant qui peut être du graphite, un plastique à renfort de fibres de carbone, ou bien un métal, tel que l'acier inoxydable, un alliage métallique ou tout autre matériau conducteur de courant. Les fluides cathodique et anodique sont distribués sur toute la surface active de chaque électrode par les canaux 2 des circuits fluidiques, chaque circuit fluidique comprenant une entrée pour permettre l'amenée du fluide et une sortie pour permettre l'évacuation du fluide non réactif et des sous-produits des réactions électrochimiques.

Les canaux 2 du circuit fluidique sont encore à ce jour principalement réalisés par usinage ou formage à partir d'une plaque électriquement conductrice 130. Dans le premier cas, la matière est enlevée et, dans le second cas, les canaux 2 sont créés par déformation de la plaque électriquement conductrice 130. Les canaux 2 de la plaque sont conçus pour contrôler la perte de charge des écoulements qui y circulent.

Plus particulièrement, chaque circuit fluidique utilisé dans la pile à combustible à membrane échangeuse de protons est principalement réalisé à partir de métal embouti pour des raisons de coûts, d'encombrement et de performances. Généralement, l'épaisseur de la plaque électriquement conductrice 130 est comprise entre 0,1 et 0,4 mm et les canaux 2 ont de préférence une largeur comprise entre 0,2 et 2 mm, une profondeur comprise entre 0,2 et 0,5 mm, et un espacement (ou largeur de dent) compris entre 0,2 et 2 mm. La surface de diffusion des fluides est variable en fonction de la dimension de la pile et de la puissance souhaitée. Pour les applications de forte puissance, un circuit de refroidissement des fluides est généralement inséré entre les canaux de diffusion de l'hydrogène à l'anode et les canaux de diffusion de l'oxygène (ou de l'air) à la cathode. L'empilement de circuits fluidiques sur deux niveaux, voire sur trois niveaux (comme représenté sur la figure 3), forme une plaque bipolaire 100.

Néanmoins, le circuit fluidique obtenu par emboutissage de tôle métallique présente certains inconvénients, parmi lesquels notamment :
- un procédé de réalisation compliqué et un coût de production qui reste encore élevé, en particulier pour de faibles volumes de production ;
- le bombé de la plaque 130 occasionnée par le formage qui rend compliqué le dépôt des joints pour garantir l'étanchéité de la cellule 500 ;
- la difficulté pour diminuer encore l'épaisseur de la plaque 130 et son poids, déjà très optimisés, qui impactent fortement la densité d'énergie volumique et massique de la pile à combustible ; et
- la difficulté pour diminuer la largeur des canaux 2 afin d'améliorer les performances de la pile, du fait des limites de formage des tôles utilisées.

Afin de simplifier le procédé de fabrication et diminuer le coût des plaques bipolaires, qui représente approximativement 40% du coût total de la pile à combustible, les solutions mises en oeuvre dans l'art antérieur ont notamment consisté à réaliser les obstacles à l'écoulement par impression sur un substrat plan métallique ou composite pour former un guide d'écoulement, puis la plaque bipolaire à partir d'au moins deux guides d'écoulement. Ce procédé permet, en variante, de réaliser le circuit fluidique sur la couche de diffusion gazeuse 120, en dehors de la plaque bipolaire 100.

D'autres agencements des circuits fluidiques, non détaillés ici, sont possibles. Par exemple, une plaque bipolaire 100 peut comprendre seulement deux circuits fluidiques, dédiés respectivement à chacun des deux réactifs. Par ailleurs, une plaque bipolaire 100 comprenant deux ou trois circuits fluidiques peut être constituée de plusieurs sous-ensembles disjoints, comprenant chacun au moins un circuit fluidique. Une plaque bipolaire 100 présentant les fonctions décrites précédemment est alors formée au moment de l'assemblage de la pile, lorsque les cellules sont empilées et qu'un effort de compression leur est appliqué.

### Différentes zones d'une plaque bipolaire

En référence à la figure 5, une plaque bipolaire 100 peut comprendre deux zones différentes entre elles :
- une zone active (ZA), par exemple en contact avec la couche de diffusion gazeuse 120 ou GDL, et
- une zone d'homogénéisation (ZH), typiquement disposée en appui sur un renfort de l'assemblage membrane-électrodes ou AME.

Chacune de ces deux zones comprend des nervures (ou dents) réalisant un guide d'écoulement. Par ailleurs, notamment en zone d'homogénéisation (ZH), voire autour de la zone active (ZA), un joint d'étanchéité peut être prévu qui entoure, de préférence entièrement, le guide d'écoulement.

### Réalisation de circuits fluidiques imprimés

En référence à la figure 4, l'impression de circuits fluidiques conducteurs est aujourd'hui avantageusement réalisée grâce à l'utilisation d'un masque de sérigraphie 11 contenant l'image du circuit fluidique à imprimer. On fait passer une encre conductrice 700 à thixotropie très élevée à travers ce masque 11 et l'impression permet de déposer des motifs 21 de nervures, appelées aussi dents, sur la face 101 d'un substrat 10, de sorte à obtenir un circuit fluidique conducteur.

Plus particulièrement, la sérigraphie par écran maillé (désigné par mesh en langue anglaise) est basée sur l'utilisation d'un masque ou écran 11 constitué de deux composants principaux : un maillage (« mesh ») et une émulsion. Le maillage, tendu à l'intérieur d'un cadre 800, est le support mécanique de l'écran 11. Sa porosité est définie pour qu'il puisse être facilement traversé par l'encre. L'émulsion est un dépôt réalisé sur le maillage, et imprégnant le maillage à l'endroit de son dépôt, de manière à former une couche étanche à l'encre 700. Les vides présents dans cette couche d'émulsion sont destinés à être remplis par l'encre 700 au moment de la sérigraphie. L'épaisseur de la couche d'émulsion détermine en grande partie l'épaisseur de la couche d'encre déposée.

Cela fait maintenant plusieurs années que l'impression par sérigraphie est utilisée pour fabriquer des circuits fluidiques conducteurs destinés à une utilisation en PEMFC. Différents documents de brevet ont fourni des descriptions plus ou moins détaillées des possibilités d'impression des dents en termes de hauteur et de largeur. Des informations ont aussi été données sur la nature (solvant, matériau conducteur, ...) et les propriétés (viscosité, seuil d'écoulement, ...) des encres utilisées pour réaliser ces circuits fluidiques.

Les dents imprimées doivent assurer le passage de très haute densité de courant ; elles doivent être par conséquent très conductrices. De manière générale, la résistivité d'une plaque bipolaire ne doit pas dépasser 10 Ohm.cm².

Dans la pratique, il est particulièrement complexe de formuler une encre à la fois très conductrice et permettant d'obtenir des facteurs de forme dent/canaux (entre largeur et profondeur des canaux d'écoulement) élevés.

En effet, pour atteindre les facteurs de forme dent/canaux recherchés, le choix pour la formulation de l'encre est fortement restreint en terme de :
- nature de liant,
- taux de liant (qui doit être élevé pour conférer à l'encre une haute thixotropie),
- solvant utilisé, et
- choix de procédé de dépôt.

Comme illustré sur la figure 3, une plaque bipolaire comprend au moins deux guides d'écoulement situés de part et d'autre d'un feuillard, souvent en acier inoxydable. Notamment, le circuit fluidique du liquide de refroidissement est forcément imprimé au dos de l'un parmi le circuit fluidique du carburant (H₂) ou le circuit fluidique de l'oxydant (O₂).

Par ailleurs, pour améliorer la conductivité, la rugosité (aplanissement des sommets des dents), et la densité des dépôts par impression, une étape de calandrage est souvent effectuée sur les dents imprimées.

Cette étape de calandrage est particulièrement problématique lorsqu'elle doit être réalisée sur une plaque bipolaire comprenant au moins deux guides d'écoulement ou circuits fluidiques situés de part et d'autre d'un même feuillard.

En effet, les deux circuits fluidiques imprimés ont, dans la majorité des cas, un design différent et il n'y a pas alors d'alignement des dents de part et d'autre du feuillard, notamment au niveau de la zone active (ZA). En particulier, du fait de la différence de viscosité des fluides amenés à circuler dans les différents guides d'écoulement d'un réacteur électrochimique (un gaz pour l'anode et la cathode et un liquide pour le circuit de refroidissement), il est même préférable que les espacements entre les dents ou nervures, et/ou leurs épaisseurs, soient différents. En outre, les circuits fluidiques imprimés de part et d'autre d'un même feuillard peuvent être de natures différentes entre elles, et donc présenter des résistances mécaniques différentes entre elles. L'on comprend donc que, lors du calandrage, des contraintes inhomogènes sont appliquées aux différentes zones des circuits fluidiques imprimés de part et d'autre du feuillard ; or certaines zones ne peuvent être contraintes sans que cela n'affecte négativement leurs propriétés, dont leur forme notamment (élargissement des dents par exemple).

Notons ici que ce problème ne peut pas être entièrement résolu en réalisant l'étape de calandrage sur un premier des deux circuits, avant d'imprimer le second sur l'autre face du feuillard, pour réaliser à nouveau une étape de calandrage destinée à améliorer le second circuit. Notons également que, lors de l'impression par sérigraphie du second circuit au verso du feuillard, certaines parties peuvent ne pas être imprimées et/ou des bavures peuvent apparaître du fait que la présence du premier circuit au recto résulte en une non-planéité du support d'impression.

US 2005/123817 A1 et EP 2197066 A1 décrivent des procédés de fabrication d'un guide d'écoulement comprenant le dépôt d'une couche sacrificielle sur un support par sérigraphie.

Un objet de la présente invention est donc de proposer un procédé de fabrication de circuits fluidiques qui permette de pallier l'un au moins des inconvénients de l'art antérieur. Un objet de la présente invention est plus particulièrement de proposer un procédé de fabrication de circuits fluidiques qui permette d'éviter, ou à tout le moins de limiter, les effets négatifs du calandrage, en particulier sur la forme des dents constituant chaque guide d'écoulement.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, un premier aspect de l'invention concerne un procédé de fabrication d'au moins un guide d'écoulement pour réacteur électrochimique, comprenant les étapes suivantes :
- Fournir un substrat,
- Fournir un premier écran maillé comprenant des premières ouvertures configurées pour former au moins un négatif d'un premier motif de nervures d'un premier guide d'écoulement,

- Imprimer, sur une première face du substrat, une première couche sacrificielle à base d'un premier élastomère par sérigraphie à l'aide du premier écran maillé,
- déposer, sur la première face du substrat, une première couche non sacrificielle à base d'une première encre d'impression pour former les nervures du premier guide d'écoulement,
- fabriquer, sur la seconde face du substrat, un deuxième guide d'écoulement comprenant des nervures, et
- calandrer au moins les nervures du deuxième guide d'écoulement, puis
- retirer la première couche sacrificielle.

Ainsi, l'invention repose sur une utilisation novatrice d'une couche sacrificielle à base d'élastomère dont la forme correspond au négatif de la forme de la couche non sacrificielle formant le guide d'écoulement. Avoir recours à une telle couche sacrificielle sur laquelle la couche non sacrificielle est ensuite déposée permet d'avoir un support quasiment plan sur la première face du substrat, de sorte que les contraintes appliquées sur les nervures du guide d'écoulement supporté par la seconde face du substrat, lors de son calandrage, sont moins inhomogènes, voire sont rendus sensiblement homogènes, au moins sur la partie de la surface du substrat rendu quasiment plan du fait de la présence de la couche sacrificielle et du guide d'écoulement sur la première face du substrat. En effet, la couche sacrificielle et le guide d'écoulement supporté par la première face du substrat fournissent un soutien mécanique quasiment plan au calandrage du guide d'écoulement supporté par la seconde face du substrat. La gestion des efforts sur le substrat, la gestion de la planitude du sommet des nervures du guide d'écoulement supporté par la seconde face du substrat, et éventuellement la gestion de l'épaisseur des nervures du guide d'écoulement supporté par la seconde face du substrat, sont ainsi significativement améliorées.

En outre, grâce à l'utilisation d'une couche sacrificielle, il est possible de réaliser le dépôt de la première couche non sacrificielle par le biais d'une méthode autre que la sérigraphie, en en conservant potentiellement les avantages.

Plus particulièrement, l'utilisation de la sérigraphie pour le dépôt de la première couche non sacrificielle imposerait que les propriétés de l'encre d'impression soient compatibles avec cette technique de dépôt et permettent en particulier d'obtenir des facteurs de forme dents/canaux élevés. Notamment, l'encre doit alors présenter une thixotropie élevée. Cette contrainte réduit grandement le champ des possibles en termes de composition de l'encre et empêche notamment d'opter pour certaines encres présentant pourtant un niveau de conductivité élevé souhaité en particulier pour les guides d'écoulement des réactifs d'un réacteur électrochimique. Ainsi, un dépôt de la première couche non sacrificielle par sérigraphie impose de réaliser un compromis entre forme et dimensions des dents et conductivité des dents.

L'utilisation d'une couche sacrificielle permet donc que les contraintes liées à l'emploi de la sérigraphie portent sur le matériau employé pour la réalisation de cette couche sacrificielle et non sur l'encre d'impression. Cela permet ainsi de gagner en liberté dans la formulation de l'encre d'impression et notamment de pouvoir opter pour des encres d'impression plus conductrices que celles employées actuellement, améliorant ainsi les capacités des réacteurs électrochimiques fabriqués à partir de guides d'écoulement selon l'invention.

Ce nouveau degré de liberté concernant les propriétés de l'encre d'impression, et notamment concernant sa viscosité, permet également d'opter pour un dépôt par enduction et ainsi d'envisager une augmentation de la percolation entre les particules électriquement conductrices constituant le cas échéant en partie l'encre d'impression et une amélioration de l'état de surface des dents obtenues, ce qui conduit le cas échéant à une amélioration de la conductivité entre plaque(s) et/ou électrode(s) d'un réacteur électrochimique. D'autres méthodes que l'enduction, comme le raclage ou la pulvérisation, peuvent, en complément ou en alternative à l'enduction, bénéficier des mêmes avantages en termes de relâchement de contraintes sur la formulation de l'encre d'impression.

De plus, la couche sacrificielle fonctionne également comme un masque lors du dépôt de la première couche non sacrificielle, ce qui permet d'éviter les bavures souvent obtenues lors du dépôt de la première couche non sacrificielle par sérigraphie sans couche sacrificielle, ou lors d'une éventuelle étape de calandrage subséquente de cette première couche non sacrificielle.

Selon un exemple, le procédé de fabrication du premier aspect de l'invention peut comprendre en outre les étapes suivantes :
- Fournir un deuxième écran maillé comprenant des deuxièmes ouvertures configurées pour former au moins un négatif d'un deuxième motif des nervures du deuxième guide d'écoulement,
- Imprimer, sur la seconde face du substrat, une deuxième couche sacrificielle à base d'un deuxième élastomère par sérigraphie à l'aide du deuxième écran maillé, et
- déposer, sur la deuxième face du substrat, une deuxième couche non sacrificielle à base d'une deuxième encre d'impression pour former les nervures du deuxième guide d'écoulement.

Le procédé selon le premier aspect de l'invention permettant d'obtenir, au recto du substrat, une surface complètement, ou du moins sensiblement, plane après le dépôt de la première couche non sacrificielle et avant le retrait de la première couche sacrificielle, permet ainsi de réaliser facilement le même procédé au verso du substrat, ainsi que de procéder au calandrage de la plaque, que ce soit par l'une ou l'autre de ses faces ou par les deux faces, l'une après l'autre ou simultanément, en limitant l'inhomogénéité des contraintes appliquées aux différentes zones des circuits fluidiques imprimés de part et d'autre du substrat.

Un deuxième aspect de l'invention concerne un procédé de fabrication d'une plaque bipolaire pour réacteur électrochimique, et en particulier pour pile à combustible à membrane échangeuse de protons, comprenant un procédé de fabrication selon un mode de réalisation du premier aspect de l'invention.

Un troisième aspect de l'invention concerne une plaque bipolaire pour réacteur électrochimique obtenu par mise en oeuvre d'un mode de réalisation du procédé de fabrication selon le premier aspect de l'invention.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement une vue en perspective éclatée d'une partie d'un réacteur électrochimique selon un mode de réalisation de l'art antérieur.
La figure 2 représente schématiquement une vue en perspective regroupée d'un empilement de deux parties d'un réacteur électrochimique selon le mode de réalisation illustré sur la figure 1.
La figure 3 représente une vue en perspective d'une partie au moins d'une plaque bipolaire destinée à être située entre deux coeurs électrochimiques d'un réacteur électrochimique selon son mode de réalisation illustré sur la figure 1.
La figure 4 est une représentation schématique en coupe de côté d'une étape d'impression par sérigraphie pour la formation d'un motif d'impression.
La figure 5 représente schématiquement une vue de dessus d'une plaque bipolaire en différenciant sa zone active et ses zones d'homogénéisation.
Les figures 6A à 6C représentent schématiquement des vues partielles de dessus illustrant différentes étapes d'un mode de réalisation du procédé de fabrication d'un guide d'écoulement selon le premier aspect de l'invention.
La figure 7A représente schématiquement une vue en coupe du premier écran maillé permettant l'impression d'un motif tel qu'illustré sur la figure 6A.
Les figures 7B et 7C représentent schématiquement des vues partielles en coupe illustrant différentes étapes du premier mode de réalisation du procédé de fabrication d'un guide d'écoulement selon le premier aspect de l'invention mettant en oeuvre le premier écran maillé illustré sur la figure 7A.
La figure 8 représente un agrandissement d'une zone de la figure 6B sur laquelle un mode de réalisation optionnel comprenant une languette a en outre été illustré.
Les figures 9 à 11 illustrent chacune une vue en coupe schématique d'un exemple de configuration de deux guides d'écoulement selon un aspect de l'invention.
Les figures 12 et 13 illustrent chacune une vue en coupe schématique d'un exemple de configuration d'une plaque bipolaire selon un aspect de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs et les largeurs des différents éléments illustrés ne sont pas nécessairement représentatifs de la réalité ou de facteurs de forme réalistes.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un mode de réalisation, la deuxième encre d'impression est électriquement conductrice de sorte que les nervures du deuxième guide d'écoulement soient électriquement conductrices.

Selon un mode de réalisation, les nervures du deuxième guide d'écoulement sont électriquement conductrices.

Selon un mode de réalisation, l'étape consistant à calandrer les nervures du deuxième guide d'écoulement est réalisée avant une étape consistant à retirer la deuxième couche sacrificielle.

Selon un mode de réalisation, le procédé selon le premier aspect de l'invention comprend en outre le cas échéant avant l'étape consistant à fabriquer le deuxième guide d'écoulement et de préférence avant l'étape consistant à retirer la première couche sacrificielle, une étape consistant à calandrer les nervures du premier guide d'écoulement.

Selon un exemple du mode de réalisation précédent, les étapes consistant à calandrer les nervures du premier guide d'écoulement et à calandrer les nervures du deuxième guide d'écoulement sont réalisées simultanément, en une seule opération de calandrage.

Selon un autre exemple du mode de réalisation précédent, le premier élastomère et le deuxième élastomère présentent des caractéristiques de déformabilité sous calandrage(s) différentes de celles que présentent les nervures du premier guide d'écoulement et les nervures du deuxième guide d'écoulement.

Selon un mode de réalisation, le premier élastomère et le deuxième élastomère présentent des caractéristiques de déformabilité sous calandrage(s) différentes entre elles.

Selon un exemple du mode de réalisation précédent, la différence de caractéristiques de déformabilité sous calandrage entre le premier élastomère et le deuxième élastomère est paramétrée pour déformer les nervures du premier guide d'écoulement et les nervures du deuxième guide d'écoulement de sorte que les nervures du premier guide d'écoulement et les nervures du deuxième guide d'écoulement présentent, après leur calandrage(s), des épaisseurs différentes entre elles.

Selon un mode de réalisation, le premier élastomère présente une dureté différente de celle du deuxième élastomère.

Selon un exemple du mode de réalisation précédent, la différence de dureté entre le premier élastomère et le deuxième élastomère est paramétrée de sorte que les étapes consistant à calandrer les nervures du premier guide d'écoulement et à calandrer les nervures du deuxième guide d'écoulement aient des effets dissymétriques sur les nervures du premier guide d'écoulement relativement aux nervures du deuxième guide d'écoulement ou de sorte à retrouver une symétrie de leurs effets entre les nervures du premier guide d'écoulement et les nervures du deuxième guide d'écoulement, par exemple malgré que les premier et deuxième motifs soient dissymétriques entre eux relativement à un plan d'extension principal du substrat.

Selon un mode de réalisation, la première couche sacrificielle présente une épaisseur différente de celle de la deuxième couche sacrificielle.

Selon un exemple du mode de réalisation précédent, la différence d'épaisseur entre la première couche sacrificielle et la deuxième couche sacrificielle est paramétrée de sorte que les étapes consistant à calandrer les nervures du premier guide d'écoulement et à calandrer les nervures du deuxième guide d'écoulement aient des effets dissymétriques sur les nervures du premier guide d'écoulement relativement aux nervures du deuxième guide d'écoulement ou de sorte à retrouver une symétrie de leurs effets entre les nervures du premier guide d'écoulement et les nervures du deuxième guide d'écoulement, par exemple malgré que les premier et deuxième motifs soient dissymétriques entre eux relativement à un plan d'extension principal du substrat.

Selon un mode de réalisation, la première encre d'impression est électriquement conductrice de sorte que les nervures du premier guide d'écoulement soient électriquement conductrices.

Selon un mode de réalisation alternatif au précédent, la première encre d'impression est non-conductrice, ou peu conductrice, de sorte que les nervures du premier guide d'écoulement soient non électriquement conductrices, ou moins bonnes conductrices que les nervures du deuxième guide d'écoulement, respectivement.

Selon un mode de réalisation, le premier guide d'écoulement est destiné à guider l'écoulement d'un liquide de refroidissement.

Selon un mode de réalisation, le deuxième guide d'écoulement est destiné à guider l'écoulement d'un réactif pour réacteur électrochimique.

Selon un mode de réalisation, les ouvertures sont configurées pour former en outre un joint d'étanchéité non sacrificiel autour d'au moins un guide d'écoulement dont lesdites ouvertures forment le négatif.

Selon un mode de réalisation, l'impression d'au moins une couche sacrificielle et le dépôt d'au moins une couche non sacrificielle sont configurés de telle sorte que l'épaisseur du joint d'étanchéité non-sacrificiel est supérieure à la hauteur des nervures du guide d'écoulement dont les ouvertures forment le négatif.

Selon un mode de réalisation, le dépôt d'au moins une couche non sacrificielle comprend la mise en oeuvre d'au moins une technique de dépôt parmi l'enduction, le raclage, la pulvérisation et la sérigraphie.

Selon un exemple, au moins un dépôt d'une couche non sacrificielle, de préférence chaque dépôt d'une couche non sacrificielle, est configuré de sorte que l'encre d'impression telle que déposée ne recouvre pas la couche sacrificielle servant à former, sur la face du substrat sur laquelle la couche sacrificielle a été imprimée, les nervures du guide d'écoulement correspondant, de préférence au moins depuis le début d'une étape de séchage de l'encre.

Selon un exemple, au moins une encre d'impression, de préférence chaque encre d'impression, présente une viscosité sensiblement comprise entre 1 et 50 Pa.s pour une vitesse de cisaillement sensiblement égale à 0,1 s⁻¹ et sensiblement comprise entre 0,5 à 10 Pa.s pour une vitesse de cisaillement sensiblement égale à 100 s⁻¹.

Selon un mode de réalisation, le procédé comprend également une étape de formation, pour au moins une couche sacrificielle, de préférence pour chaque couche sacrificielle, d'au moins une languette sacrificielle solidaire d'une partie de la couche sacrificielle considérée qui forme le négatif d'un motif de nervures, ladite étape de formation étant conjointe ou non à l'étape d'impression de la couche sacrificielle considérée et/ou ladite étape de formation étant réalisée en mettant en oeuvre une impression par sérigraphie, à l'aide ou non du même écran maillé que celui à l'aide duquel la couche sacrificielle considérée est elle-même imprimée.

Selon un exemple, chaque languette sacrificielle formée l'est de sorte à ne pas être solidaire d'un joint d'étanchéité non sacrificiel.

Selon un mode de réalisation, le procédé comprend en outre, suite à l'étape d'impression d'au moins une couche sacrificielle, de préférence suite à l'étape d'impression de chaque couche sacrificielle, au moins l'une parmi une étape de réticulation de la couche sacrificielle concernée et une étape de séchage de la couche sacrificielle concernée.

Selon un exemple, au moins un élastomère, de préférence chaque élastomère, comprend au moins l'un parmi du silicone, du polyuréthane, du caoutchouc nitrile, de l'éthylène-propylène-diène monomère (EPDM), un fluoroélastomère tel que l'un au moins parmi ceux de la famille des matériaux fluoroélastomères à base de fluorocarbure, définie par exemple par la norme internationale ASTM D1418, communément appelés caoutchoucs fluorés et connus sous le sigle FKM, et un perfluoroélastomère, notamment connu sous le sigle FFKM.

Selon un exemple, au moins une encre d'impression comprend des particules en au moins un graphite, de préférence des particules de différents graphites, et/ou des particules de tailles différentes entre elles, un liant et un solvant.

Selon un mode de réalisation, le premier écran maillé comprenant un premier maillage et une première émulsion, la première émulsion présente une épaisseur sensiblement comprise entre 100 et 200 µm, de préférence sensiblement comprise entre 150 et 200 µm, et encore plus préférentiellement sensiblement égale à 200 µm, et/ou le premier maillage présente une épaisseur sensiblement comprise entre 50 et 150 µm, de préférence sensiblement comprise entre 80 et 120 µm, et encore plus préférentiellement sensiblement égale à 100 µm.

Selon un mode de réalisation, l'impression par sérigraphie d'au moins une couche sacrificielle, de préférence de chaque couche sacrificielle, est réalisée en appliquant, sur l'élastomère à base duquel la couche sacrificielle considérée est constituée, une contrainte de cisaillement, la viscosité dudit élastomère étant comprise entre 10 et 500 Pa.s pour une vitesse de cisaillement de 0,1 s⁻¹, et la viscosité dudit élastomère étant comprise entre 5 et 100 Pa.s pour une vitesse de cisaillement de 100 s⁻¹.

Selon un exemple, le substrat fourni comprend au moins l'une parmi une couche d'électrode du réacteur électrochimique, une couche de diffusion gazeuse et une plaque électriquement conductrice.

On entend par un paramètre « sensiblement égal/supérieur/inférieur à » une valeur donnée que ce paramètre est égal/supérieur/inférieur à la valeur donnée, à plus ou moins 20 %, voire 10 %, près de cette valeur. On entend par un paramètre « sensiblement compris entre » deux valeurs données que ce paramètre est au minimum égal à la plus petite valeur donnée, à plus ou moins 20 %, voire 10 %, près de cette valeur, et au maximum égal à la plus grande valeur donnée, à plus ou moins 20 %, voire 10 %, près de cette valeur.

On entend par « liant » :
- Dans un matériau solide, une substance solide qui enrobe et lie entre eux les composants d'un matériau hétérogène de manière à lui conférer de la cohésion, et
- Dans un matériau fluide, une substance fluide, de préférence non-volatile, à laquelle d'autres composants, telles que des charges conductrices d'électricité et/ou un solvant, sont mélangés pour produire une encre conductrice.

Une variation de concentration en liant dans une encre au moins une encre d'impression, de préférence chaque encre d'impression, induit une variation de la thixotropie de l'encre et/ou une variation de la résistance mécanique sous contrainte, notamment en compression, d'un motif imprimé à l'aide de cette encre.

On entend par une couche à base d'un matériau A, une couche comprenant ce matériau A et éventuellement d'autres matériaux.

Une couche peut par ailleurs être composée de plusieurs sous-couches d'un même matériau ou de matériaux différents.

Les valeurs de viscosité renseignées sont définies à température ambiante.

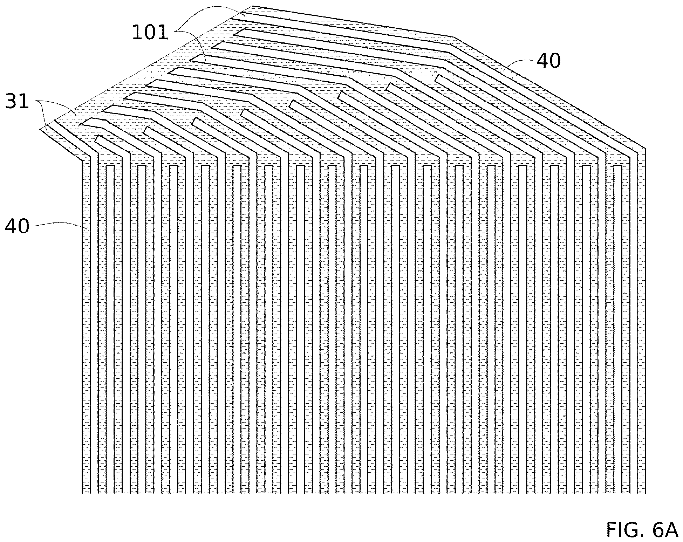

Un exemple de procédé de fabrication selon le premier aspect de l'invention va maintenant être décrit étape par étape, en référence aux figures 6A à 7C. Ce procédé permet d'obtenir une plaque bipolaire selon le troisième aspect de l'invention.

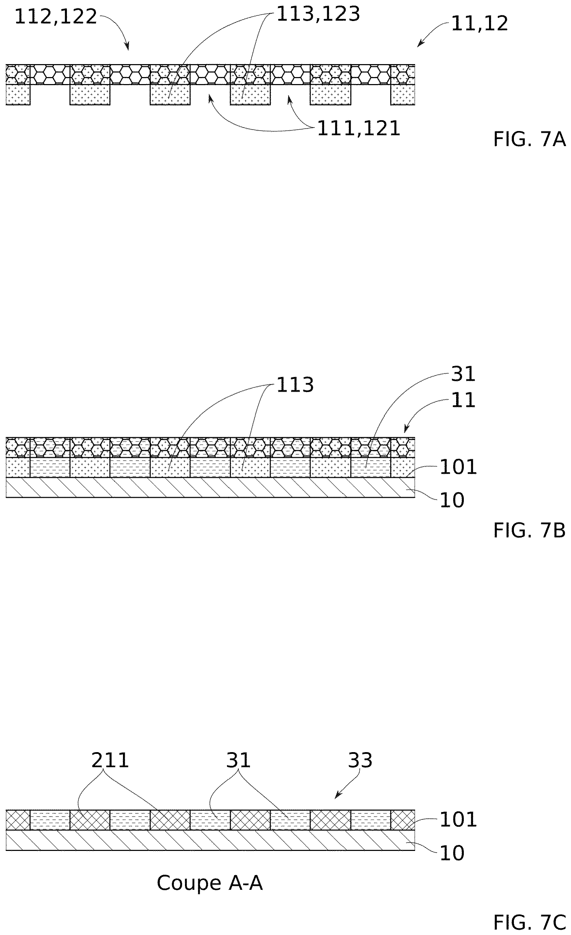

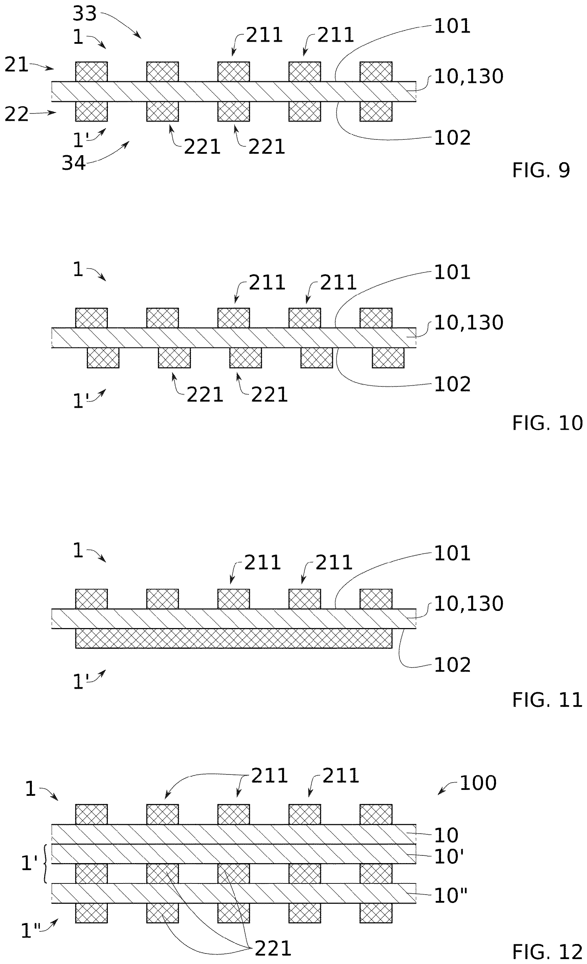

En référence aux figures 7A, 7B et 9, le procédé selon le premier aspect de l'invention comprend tout d'abord les étapes suivantes :
- fournir un substrat 10, et
- fournir un premier écran maillé 11 comprenant des ouvertures 111 configurées pour former au moins un négatif d'un premier motif 21 de nervures 211 d'un premier guide d'écoulement 1.

L'écran maillé 11 comprend un maillage 112 et une émulsion 113. Typiquement, l'émulsion 113 présente une épaisseur sensiblement comprise entre 100 et 200 µm, de préférence sensiblement comprise entre 150 et 200 µm, et encore plus préférentiellement sensiblement égale à 200 µm ; le maillage 112 présente une épaisseur sensiblement comprise entre 50 et 150 µm, de préférence sensiblement comprise entre 80 et 120 µm, et encore plus préférentiellement sensiblement égale à 100 µm. L'invention n'est toutefois pas limitée à de telles valeurs d'épaisseur d'émulsion et/ou de maillage. En outre, d'autres paramètres, tels que la taille de maille du maillage, peuvent être à considérer.

Sur la figure 7A, on observe que les ouvertures 111 de l'écran maillé 11 correspondent à des zones de l'écran maillé 11 qui ne sont pas recouvertes de l'émulsion 113. Au niveau de ces ouvertures 111, on observe également que le maillage 112 de l'écran maillé 11 n'est pas imbibé de l'émulsion 113. La matière à imprimer, via cet écran 11, va donc pouvoir passer au travers du maillage 112 et remplir les espaces laissés vides par l'émulsion 113.

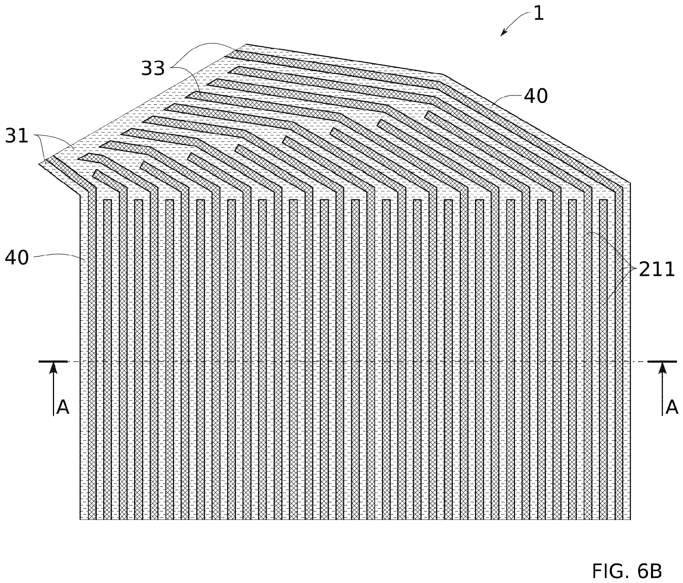

En référence aux figures 6A et 6B, le procédé de fabrication selon le premier aspect de l'invention comprend en outre les étapes suivantes :
- imprimer sur une première face 101 du substrat 10 une première couche sacrificielle 31 à base d'un premier élastomère par sérigraphie à l'aide du premier écran maillé 11, puis
- déposer, sur la première face 101, une première couche non sacrificielle 33 à base d'une encre d'impression dans une partie au moins du premier motif 21 pour former les nervures 211 d'un premier guide d'écoulement 1.

Préférentiellement, on prévoit, suite à l'étape d'impression de la première couche sacrificielle 31, une étape de réticulation et/ou une étape de séchage de cette même couche.

L'encre d'impression est plus particulièrement déposée entre des nervures de la première couche sacrificielle 31, pour remplir au moins partiellement, de préférence totalement et sans débordement, le négatif du motif 21 de nervures 211 du premier guide d'écoulement 1.

Le procédé de fabrication selon le premier aspect de l'invention comprend en outre, avant ou après l'une de l'autre parmi les étapes d'impression de la première couche sacrificielle 31 et de dépôt de la première couche non sacrificielle 33, une étape de fabrication, sur la seconde face 102 du substrat 10, d'un deuxième guide d'écoulement 1' comprenant des nervures 221.

Une fois le premier guide d'écoulement 1 et le deuxième guide d'écoulement 1' formés sur les deux faces 101 et 102 opposées du substrat 10, le procédé de fabrication selon le premier aspect de l'invention comprend en outre une étape de calandrage des nervures 221 du deuxième guide d'écoulement 1'.

La première couche sacrificielle 31 n'est avantageusement retirée qu'après l'étape de calandrage des nervures 221 du deuxième guide d'écoulement 1'. De la sorte, la première couche sacrificielle 31 et les nervures 211 du premier guide d'écoulement 1 supportées par la première face 101 du substrat 10 fournissent un soutien mécanique quasiment plan au calandrage des nervures 221 du deuxième guide d'écoulement 1' supporté par la seconde face 102 du substrat 10 et les contraintes appliquées sur les nervures 221 du deuxième guide d'écoulement 1' supporté par la seconde face 102 du substrat, 10 lors de son calandrage, sont moins inhomogènes, voire sont rendues sensiblement homogènes. On évite ainsi, ou à tout le moins on limite, les effets négatifs d'une étape de calandrage telle que pratiquée selon l'art antérieur, en particulier sur la forme des dents 221 constituant le deuxième guide d'écoulement 1'.

Selon un exemple du premier aspect de l'invention, le procédé comprend en outre des étapes similaires réalisées à celles décrites ci-dessus relatives à la fabrication du premier guide d'écoulement 1, mais réalisées sur l'autre face 102 (Cf. figure 9) du substrat 10, de manière à former le deuxième guide d'écoulement 1' au verso de la première face 101. Toujours en référence à la figure 7A, ces étapes sont les suivantes :
- fournir un deuxième écran maillé 12 comprenant des ouvertures 121 configurées pour former au moins un négatif d'un deuxième motif 22 des nervures 221 du deuxième guide d'écoulement 1',
- Imprimer, sur une seconde face 102 du substrat 10, une couche sacrificielle 32 à base d'un deuxième élastomère par sérigraphie à l'aide du deuxième écran maillé 12,
- Déposer, sur la seconde face 102 du substrat 10, une deuxième couche non sacrificielle 34 à base d'une encre d'impression pour former les nervures 221 du deuxième guide d'écoulement 1', puis
- retirer la deuxième couche sacrificielle 32.

Le deuxième écran maillé 12 présente une structure similaire à celle du premier écran maillé 11. Cependant, les dimensions de son maillage 122 et de son émulsion 123 peuvent parfaitement différer de celles du maillage 112 et de l'émulsion 113 du premier écran maillé 11. En effet, les différents guides d'écoulement d'un réacteur électrochimique sont typiquement destinés à guider des écoulements de fluide anodique, de fluide cathodique et de fluide de refroidissement. Ces différents fluides présentent chacun des propriétés physiques différentes qui, prises en compte lors du dimensionnement de chacun des guides d'écoulement correspondants, induisent des structures différentes des guides d'écoulement entre eux, et notamment entre le guide d'écoulement de fluide anodique ou cathodique et le guide d'écoulement de fluide de refroidissement, afin d'assurer leurs fonctions respectives de façon optimisée. Plus particulièrement, l'on peut souhaiter que les canaux destinés à l'écoulement des fluides cathodique et anodique soient de forme et de dimensions induisant une perte de charge élevée, tandis que les canaux destinés à l'écoulement du fluide de refroidissement soient de forme et de dimensions induisant une perte de charge faible. Ainsi, de manière avantageuse, chaque guide est fabriqué à l'aide d'un écran maillé dont le maillage et l'émulsion présentent des formes et/ou dimensions configurées pour que les dents ensuite formées permettent un bon écoulement du fluide dans le guide. Le deuxième motif 22 de nervures 221 du deuxième guide d'écoulement 1' peut donc être différent du premier motif 21 de nervures 121 du premier guide d'écoulement 1.

Du point du vue des matériaux utilisés pour les guides d'écoulement, ceux utilisés pour fabriquer les guides d'écoulement côtés anodique et cathodique sont impérativement conducteurs, tandis que celui ou ceux utilisés pour fabriquer le guide d'écoulement du fluide de refroidissement est préférentiellement conducteur pour permettre une bonne qualité de passage électrique entre les faces anodique et cathodique de la plaque bipolaire. Ainsi, bien que de façon moins préférentielle, le matériau utilisé pour fabriquer le guide d'écoulement du fluide de refroidissement peut également être non-conducteur, ou moins bon conducteur, sous réserve qu'un contact électrique de qualité soit assuré par ailleurs entre les faces anodique et cathodique d'une plaque bipolaire ou entre les faces anodiques et cathodiques de plusieurs plaques bipolaires d'un empilement de coeurs électrochimiques. On fera, par la suite, l'hypothèse d'un matériau conducteur pour le guide d'écoulement du fluide de refroidissement, sans que cela ne soit limitatif.

Préférentiellement, on prévoit, suite à l'étape d'impression de la deuxième couche sacrificielle 32, une étape de réticulation et/ou une étape de séchage de cette même couche.

Lorsque le deuxième guide d'écoulement 1' est fabriqué de façon similaire au premier guide d'écoulement 1, l'étape de calandrage des nervures 221 du deuxième guide d'écoulement 1' est réalisée avant l'étape de retrait de la deuxième couche sacrificielle 32. De la sorte, l'amélioration quant à la gestion de la planitude des sommets des nervures 221 du deuxième guide d'écoulement 1', la gestion des efforts sur le substrat 10, et éventuellement la gestion de l'épaisseur des nervures 221 du deuxième guide d'écoulement 1', bénéficie non seulement du soutien mécanique quasiment plan de la première couche sacrificielle 31 et des nervures 211 du premier guide d'écoulement 1, mais également du maintien mécanique que leur offre la deuxième couche sacrificielle 32.

De façon avantageuse mais non limitative, on prévoit également une étape de calandrage des nervures 211 du premier guide d'écoulement 1.

Le cas échéant, cette étape de calandrage est réalisée avant l'étape de fabrication du deuxième guide d'écoulement 1', mais avant l'étape consistant à retirer la première couche sacrificielle 31.

De préférence, cette étape de calandrage est réalisée après l'étape de fabrication du deuxième guide d'écoulement 1', mais avant l'étape consistant à retirer la deuxième couche sacrificielle 32. Encore plus préférentiellement, cette étape de calandrage est réalisée après l'étape de fabrication du deuxième guide d'écoulement 1', mais avant l'étape consistant à retirer la première couche sacrificielle 31 et avant l'étape consistant à retirer la deuxième couche sacrificielle 32. De la sorte, non seulement la première couche sacrificielle 31 et les nervures 211 du premier guide d'écoulement 1 supportées par la première face 101 du substrat 10 fournissent un soutien mécanique quasiment plan au calandrage des nervures 221 du deuxième guide d'écoulement 1' supporté par la seconde face 102 du substrat 10, mais encore la deuxième couche sacrificielle 32 et les nervures 221 du deuxième guide d'écoulement 1' supportées par la deuxième face 102 du substrat 10 fournissent un soutien mécanique quasiment plan au calandrage des nervures 211 du premier guide d'écoulement 1 supporté par la première face 101 du substrat 10 ; ainsi, à la fois les contraintes appliquées sur les nervures 211 du premier guide d'écoulement 1 supporté par la première face 101 du substrat 10 et les contraintes appliquées sur les nervures 221 du deuxième guide d'écoulement 1' supporté par la seconde face 102 du substrat 10, lors de leur(s) calandrage(s), sont moins inhomogènes, voire sont rendus sensiblement homogènes. On évite ainsi, ou à tout le moins on limite, les effets négatifs de chaque calandrage telle que pratiqué selon l'art antérieur, en particulier que ce soit sur la forme des dents 211 constituant le premier guide d'écoulement 1 ou sur la forme des dents 221 constituant le deuxième guide d'écoulement 1'. En outre, le calandrage des nervures 211 du premier guide d'écoulement 1 et le calandrage des nervures 221 du deuxième guide d'écoulement 1' peuvent alors être avantageusement réalisés simultanément, en une seule opération de calandrage.

Chaque étape de calandrage permet généralement d'améliorer la planitude des sommets des nervures 211 et 221 et la rugosité, voire la conductivité électrique, des nervures 211 et 221, ainsi que de les densifier. Avantageusement, dans le cadre de la présente invention, ni l'une ni l'autre des étapes de calandrage décrites ci-dessus n'induit en outre un élargissement significatif des nervures 211 et/ou 221 du fait que chaque couche non sacrificielle 33, 34 est maintenue entre des parois d'élastomère de la couche sacrificielle 31, 32 correspondante. Ces avantages s'ajoutent à celui que présente le procédé selon le premier aspect de l'invention selon lequel il permet d'utiliser des encres d'impression plus fluides (du fait de l'utilisation d'autres techniques d'impression que l'impression par sérigraphie pour déposer les couches sacrificielles 33 et 34), et ainsi d'obtenir des couches non sacrificielles 33, 34 pouvant être performantes, non seulement en termes de conduction électrique, mais également en termes d'une limitation de leur porosité, même avant d'avoir été soumises à une étape de calandrage. Autrement dit, chaque étape de calandrage du procédé selon le premier aspect de l'invention présente l'avantage supplémentaire de permettre que les couches non sacrificielles 33 et 34 soient maintenues par les couches sacrificielles 31 et 32, et donc d'assurer une densification des couches non sacrificielles 33 et 34, sans élargissement significatif de leurs nervures 211 et 221, alors même que la qualité de celles-ci est déjà améliorée notamment en termes de conduction électrique et de limitation de leur porosité, du fait qu'elles ont été déposées par une autre technique d'impression qu'une impression par sérigraphie.

De préférence, chaque étape de calandrage peut être réalisée une fois sèches les encres d'impression déposées de part et d'autre du substrat 10.

Pour au moins un substrat 10 en tant que plaque anodique ou cathodique, il peut être nécessaire d'imprimer au dos les canaux pour le circuit de refroidissement. Toutefois, comme déjà mentionné ci-dessus, du fait notamment de la différence de viscosité des fluides (gaz pour l'anode et la cathode et liquide pour le circuit de refroidissement), il est préférable que les espacements entre les dents et/ou les hauteurs des dents soient différents, de part et d'autre du substrat 10. L'on comprend que, dans ce contexte, la mise en oeuvre d'une impression par sérigraphie d'un négatif en élastomère sur chaque face du substrat 10 permet non seulement de calandrer simultanément les deux faces du substrat 10, mais également de jouer sur les épaisseurs des couches sacrificielles 31 et 32 en élastomère et/ou sur des caractéristiques de déformabilité sous calandrage(s) de ces couches sacrificielles 31 et 32. En effet, d'une part les couches sacrificielles 31 et 32 en élastomère servant de négatif aux dents 211 et 221 peuvent présenter des épaisseurs différentes entre elles, et permettre ainsi le dépôt de dents 211 et 221 d'épaisseurs différentes entre elles, d'autre part elles peuvent être réalisées avec des élastomères différents entre eux, au moins de par leurs caractéristiques de déformabilité sous calandrage(s), et notamment de par leurs duretés, ceci notamment afin d'obtenir des calandrages dissymétriques de part et d'autre du substrat 10 ou de retrouver une symétrique dans les calandrages des dents 211 et 221 supportées par les deux faces du substrat 10.

Notons que, par ailleurs, le premier élastomère et/ou le deuxième élastomère peuvent présenter des caractéristiques de déformabilité sous calandrage(s) différentes de celles que présentent les nervures 211 du premier guide d'écoulement et/ou les nervures 221 du deuxième guide d'écoulement. Le procédé selon le premier aspect de l'invention permet également de jouer sur ces différences.

Les différents jeux de caractéristiques de déformabilité susmentionnés permettent ainsi, de façon remarquable, de permettre d'obtenir des dents 211 et 221 de part et d'autre du substrat 10 qui présente, de façon contrôlée, des épaisseurs différentes entre elles, y compris après leur(s) calandrage(s).

L'impression d'au moins une des couches sacrificielles 31, 32 s'effectue par dépôt par sérigraphie d'un élastomère compatible en terme de viscosité avec la technique d'impression par sérigraphie. De façon préférentielle, mais non limitative, chaque élastomère est choisi parmi le silicone, le polyuréthane, le caoutchouc nitrile, l'éthylène-propylène-diène monomère (EPDM), le fluoroélastomère et le perfluoroélastomère. Chaque élastomère peut également être constitué d'un mélange de ces composés. Il est à noter que les élastomères constituant les couches sacrificielles 31 et 32 peuvent être identiques ou différents l'un de l'autre. Il est à noter en outre que la matière imprimée par sérigraphie peut être à base d'un des élastomères listés ci-dessus, voire à base de plusieurs d'entre eux. Par ailleurs, chaque couche sacrificielle 31, 32 peut en fait être un multicouche comprenant plusieurs sous-couches et dont une sous-couche peut être à base d'un élastomère différent de celui à base duquel au moins une autre sous-couche est constituée.

L'impression par sérigraphie d'au moins une des couches sacrificielles 31, 32 est réalisée en appliquant une contrainte de cisaillement sur l'élastomère à base duquel la couche sacrificielle 31, 32 considérée est constituée. La viscosité de l'élastomère à base duquel la couche sacrificielle 31, 32 considérée est constituée est avantageusement comprise entre 10 et 500 Pa.s pour une vitesse de cisaillement sensiblement égale à 0,1 s-1, et entre 5 et 100 Pa.s pour une vitesse de cisaillement sensiblement égale à 100 s-1.

L'épaisseur de chacune des couches sacrificielles 31, 32 ainsi formées, le cas échéant après réticulation et/ou séchage, doit être au moins égale, de préférence supérieure (en considérant que chaque encre d'impression en séchant va réduire en volume, et donc en hauteur), à l'épaisseur des nervures 211, 221 souhaitées de chaque motif 21, 22 respectivement.

Le dépôt de chacune des couches non sacrificielles 33, 34 a pour but de remplir une partie au moins des espaces laissés vides lors du dépôt de la couche sacrificielle 31, 32 correspondante. Ces zones correspondent aux espaces laissés vides entre les nervures 211, 221 après le retrait des écrans maillés 11, 12, et plus précisément aux emplacements des émulsions lors du dépôt des couches sacrificielles 31, 32.

Plusieurs méthodes de dépôt sont envisageables. Par exemple, il est possible de réaliser les couches non sacrificielles 33, 34 par enduction, pulvérisation ou encore raclage. Ces méthodes présentent l'avantage de tolérer des encres d'impression dont le caractère thixotrope ne doit pas être nécessairement élevé et dont la viscosité est potentiellement beaucoup plus faible que celle des encres compatibles avec la sérigraphie.

Comme mentionné précédemment, la présente invention présente l'avantage de permettre d'éviter de devoir choisir l'encre d'impression en fonction des contraintes liées à la sérigraphie. Il n'est cependant pas exclu que la sérigraphie soit tout de même mise en oeuvre pour réaliser l'une au moins des couches non sacrificielles 33 et 34.

Avantageusement, les ouvertures 111 et/ou 121 sont configurées pour former en outre un joint d'étanchéité non sacrificiel 40 autour du guide d'écoulement 1 ou 1' dont il forme le négatif. Ce joint 40 est notamment représenté aux figures 6A à 6C. Il est destiné à permettre d'assurer l'étanchéité de la plaque bipolaire ou du réacteur électrochimique fabriqué par mise en oeuvre du procédé selon le premier aspect de l'invention. Le fait de configurer les ouvertures 111 pour former le joint 40 et de ne pas fabriquer le joint 40 lors d'une étape distincte de l'étape de dépôt de la couche sacrificielle 31 permet de rationaliser le procédé de fabrication du guide d'écoulement 1. Il n'est cependant pas exclu de réaliser le joint d'étanchéité non sacrificiel 40 lors d'une étape distincte, à l'aide par exemple d'un autre écran maillé.

Il est à noter ici que les ouvertures 111, 121, de même que les nervures 211, 221, ne sont limitées, ni à une forme droite, ni à une répartition parallèle.

Plus particulièrement, on distingue principalement trois modes de circulation des réactifs ou d'un liquide de refroidissement dans les canaux d'écoulement 2 :
- les canaux en serpentin : un ou plusieurs canaux parcourent l'ensemble de la zone active en plusieurs allers-retours ;
- les canaux parallèles : un faisceau de canaux parallèles et traversants parcourt la zone active de part en part ; et
- les canaux interdigités : un faisceau de canaux parallèles et bouchés parcourt la zone active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Le procédé de fabrication selon le premier aspect de l'invention est adapté à la fabrication de guides d'écoulement 1, 1' au moins selon n'importe lequel des trois modes de circulation énoncés ci-dessus.

Une étape de stockage des guides d'écoulement, successive à l'étape de dépôt des couches non sacrificielles 33, 34, est envisageable. Les guides obtenus par une mise en oeuvre partielle du procédé selon l'invention, et plus particulièrement avant le retrait de la ou de couches sacrificielles, sont en effet aptes à être stockés en prévision de leur utilisation dans la fabrication de réacteurs électrochimiques. La présence des couches sacrificielles 31, 32 durant cette étape de stockage permet d'assurer la protection des couches non sacrificielles 33, 34.

Préférentiellement, l'impression de chaque couche sacrificielle 31, 32 et le dépôt de chaque couche non sacrificielles 33, 34 sont configurés de telle sorte que l'épaisseur du joint d'étanchéité non sacrificiel 40 est supérieure (ou égale) à la hauteur des nervures 211, 221. Avantageusement, ces étapes sont configurées de telle sorte que l'épaisseur du joint d'étanchéité non sacrificiel 40 et la hauteur des nervures 211, 221 soient telles que, lors de l'assemblage du réacteur électrochimique, le joint 40 s'écrase contre une couche de diffusion gazeuse, une couche d'électrode ou une plaque électriquement conductrice du réacteur électrochimique située en vis-à-vis, jusqu'à ce que les nervures 211, 221 du ou des guides d'écoulement 1, 1' contactent la couche de diffusion gazeuse, la couche d'électrode ou la plaque électriquement conductrice du réacteur électrochimique qui est située en vis-à-vis.

Préférentiellement, l'encre d'impression utilisée présente une viscosité sensiblement comprise entre 1 et 50 Pa.s pour une vitesse de cisaillement sensiblement égale à 0,1 s⁻¹ et sensiblement comprise entre 0,5 à 10 Pa.s pour une vitesse de cisaillement sensiblement égale à 100 s⁻¹.

Avantageusement, l'encre d'impression utilisée pour la fabrication de chacune des couches non sacrificielles 33 et 34 comprend des particules en graphite, un liant et un solvant. De façon préférentielle, l'encre d'impression contient des particules de différents graphites. Par ailleurs, l'encre d'impression peut contenir des particules de tailles différentes entre elles.

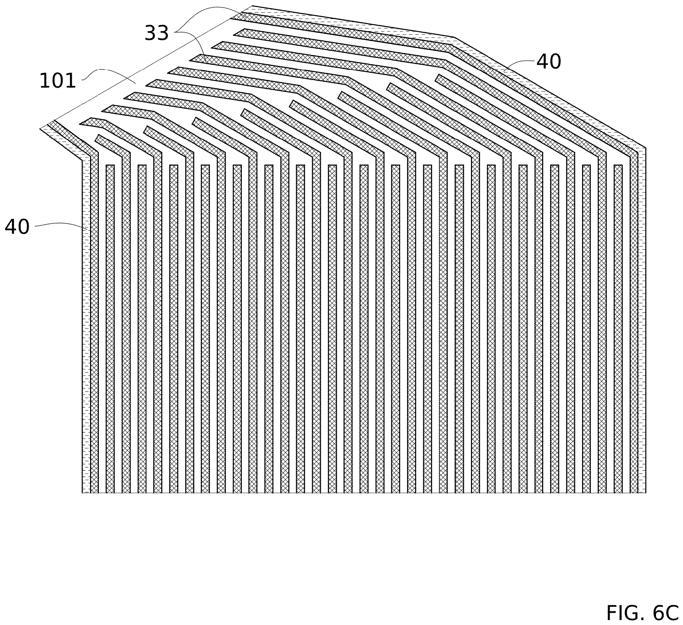

Comme déjà mentionné plus haut, et en référence à la figure 6C, le procédé selon le premier aspect de l'invention comprend également le retrait de la première couche sacrificielle 31, et le cas échéant le retrait de la deuxième couche sacrificielle 32. Chaque retrait est nécessaire à l'élaboration d'un réacteur électrochimique, car il permet de libérer les canaux d'écoulement des fluides. De préférence, chaque retrait se fait après calandrage(s). L'on comprend que chaque retrait sera facilité si l'encre conductrice est déposée de sorte à ne pas dépasser l'épaisseur de la couche sacrificielle 31, 32. Dans le cas contraire, le retrait de la couche sacrificielle 31, 32 entraînerait l'arrachement d'une partie au moins de la couche non sacrificielle 33, 34, de façon relativement non prévisible, ce qui ne serait pas avantageux. C'est notamment pourquoi, comme illustré sur la figure 7C, la couche non sacrificielle 33 déposée présente une épaisseur, de préférence avant séchage, inférieure ou égale à l'épaisseur de la couche sacrificielle 31. Par exemple, à cette même fin de faciliter le retrait de chaque couche sacrificielle 31, 32, ce dernier peut être réalisé alors que l'encre de la couche non sacrificielle 33, 34 n'est pas encore tout à fait sèche, pour peu que l'encre soit tout de même suffisamment sèche pour que les nervures 211, 221 ne s'effondrent pas sur elles-mêmes.

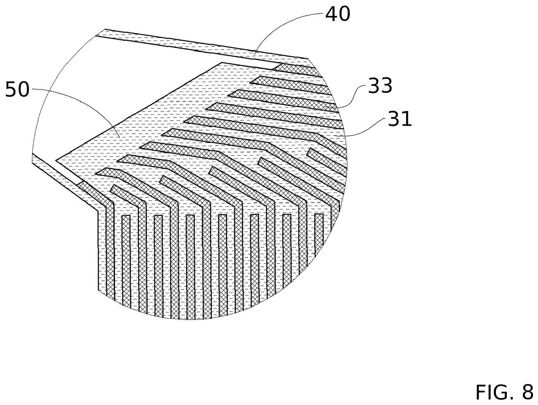

De façon avantageuse, et en référence à la figure 8, le procédé selon le premier aspect de l'invention peut comprendre une étape de formation d'une languette sacrificielle 50 uniquement solidaire d'une partie au moins de la couche sacrificielle 31 formant le négatif du motif 21 de nervures 211. Avantageusement, la languette sacrificielle 50 est formée de sorte à ne pas être solidaire du potentiel joint d'étanchéité non sacrificiel 40. De préférence, cette étape est concomitante à l'étape de dépôt de la couche sacrificielle 31. Dans ce mode de réalisation, la languette sacrificielle 50 est formée à l'aide du même écran maillé 11 que celui à l'aide duquel la couche sacrificielle 31 est imprimée et la languette 50 est donc constituée du même élastomère que la couche sacrificielle 31. Il est cependant entendu que la languette sacrificielle 50 peut être réalisée lors d'une étape distincte et à l'aide d'un autre écran maillé. La languette sacrificielle 50 peut de plus être constituée d'un matériau différent de celui à base duquel est fabriquée la couche sacrificielle 31. Cette languette 50 permet de retirer facilement, et potentiellement de façon simultanée, toutes les parties de la première couche sacrificielle 31 formant le premier motif 21 de nervures 211.

Une languette sacrificielle similaire peut être prévue pour retirer la couche sacrificielle 32.

Dans l'exemple illustré par la figure 9, un premier guide d'écoulement 1 a été fabriqué sur une face supérieure 101 d'une plaque électriquement conductrice 130 et un seconde guide d'écoulement 1' a été fabriqué sur une face inférieure 102 de la plaque 130. Des canaux d'écoulement sont ainsi ménagés de part et d'autre de la plaque 130 entre les nervures 211 et 221. Dans cet exemple, les nervures 211 et 221 des deux faces opposées s'étendent de façon parallèle, présentent les mêmes dimensions et sont situées en vis-à-vis : les nervures 211 et 221 des deux faces sont symétrique les unes des autres par rapport à la plaque 130.

Dans l'exemple illustré par la figure 10, les nervures 211 et 221 des deux faces opposées s'étendent de façon parallèle et présentent les mêmes dimensions, mais sont décalées selon une direction transversale à leur direction principale d'extension.

Dans l'exemple de la figure 11, les nervures 211 et 221 des deux faces opposées s'étendent selon des directions perpendiculaires entre elles.

Ces exemples ont vocation à montrer que toute variation entre premier guide d'écoulement 1 fabriqué sur la première face 101 du substrat 10 et second guide d'écoulement 1' fabriqué sur la deuxième face 102 du substrat 10 est envisageable, la fabrication d'un des guides d'écoulement 1 et 1' selon l'un quelconque des modes de réalisation décrits ci-dessus ne contraignant pas la fabrication de l'autre des guides d'écoulement 1 et 1', en particulier lorsque ce dernière est fabriqué selon l'un quelconque des modes de réalisation décrits ci-dessus. Par exemple, chacun des premier et second guides d'écoulement 1 et 1' fabriqués de part et d'autre d'une même plaque 130 peut être d'un mode quelconque parmi les trois modes de circulation décrits plus haut.

La mise en oeuvre de chacun des modes de réalisation décrits ci-dessus permet la fabrication d'un circuit fluidique ayant :
- Une largeur de dent 33, 34 de 400 µm,
- Une largeur de canal 2 de 400 µm,
- Une hauteur de dent 33, 34 de 200 µm.

À cette fin :
- les écrans maillés 11, 12 peuvent présenter une épaisseur d'émulsion 113, 113', 123, 123' de 200 µm,
- les ouvertures 111 de l'écran maillé 11 et les ouvertures 121 de l'écran maillé 12 peuvent présenter une largeur de 400 µm, et
- les ouvertures 111 et 121 des écrans maillés 11 et 12 qui sont adjacentes entre elles peuvent être distantes l'une de l'autre de 400 µm.

Il est entendu que, comme mentionné précédemment, chacun des guides formés peut présenter des dimensions différentes. Par exemple, la largeur des nervures ou dents du circuit anodique peut être supérieure à celle des nervures ou dents du circuit cathodique ; ceci est permis du fait d'une meilleure diffusion de l'hydrogène et de débits moins élevés en anode. De plus, les circuits de réactifs (à l'anode et à la cathode) peuvent être des circuits continus, alors que le circuit de refroidissement peut être discontinu (en forme de plots par exemple).

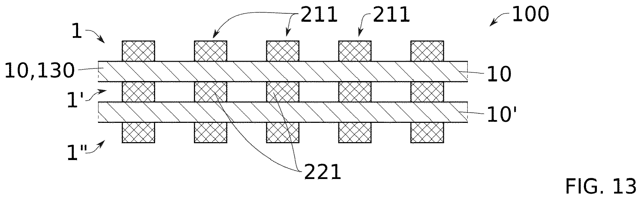

Un autre aspect de l'invention concerne une plaque bipolaire 100, notamment destinée à une application PEM. Cette plaque bipolaire peut être fabriquée par mise en oeuvre de l'un quelconque des modes de réalisation décrits ci-dessus. Deux exemples de telles plaques bipolaires 100 sont illustrés sur chacune des figures 12 et 13.

La figure 12 illustre une plaque bipolaire 100, formée par la superposition de guides d'écoulement 1, 1' et 1" obtenus par mise en oeuvre de l'un quelconque des modes de réalisation décrits ci-dessus. Dans cet exemple, trois guides d'écoulement 1, 1' et 1" sont fabriqués à partir de trois substrats 10, 10' et 10". Ces trois guides d'écoulement comportent des nervures 211, 221 sur une unique face. Le guide 1 supérieur présente des nervures 211 en saillie depuis la face supérieure du substrat 10. Le guide intermédiaire 1' et le guide inférieur 1" présentent des nervures 221 en saillie depuis les faces inférieures des substrats 10' et 10" respectivement. Lorsque ces trois guides 1, 1', et 1" sont superposés, des canaux d'écoulement d'un réactif sont ménagés entre les nervures 211 du guide supérieur 1, des canaux d'écoulement d'un liquide caloporteur sont ménagés entre les nervures 221 du guide intermédiaire 1', et des canaux d'écoulement d'un autre réactif sont ménagés entre les nervures 221 du guide inférieur 1".

La figure 13 illustre une plaque bipolaire 100, formée par la superposition de guides d'écoulement 1, 1' et 1" obtenus par mise en oeuvre de l'un quelconque des modes de réalisation décrits ci-dessus. Dans cet exemple, trois guides d'écoulement 1, 1' et 1" sont superposés. Le guide supérieur 1 et le guide intermédiaire 1' partagent un même substrat 10 et forment une configuration telle qu'illustrée sur la figure 9 dans laquelle le substrat 10 est une simple plaque électriquement conductrice 130. Cette plaque 130 comporte donc des nervures 211 et 221 en saillie depuis ses deux faces. Le guide inférieur 1" présente des nervures 221 en saillie depuis la face inférieure du substrat 10'. Comme sur la figure 12, lorsque les trois guides 1, 1' et 1" sont superposés, des canaux d'écoulement d'un réactif sont ménagés entre les nervures 211 du guide supérieur 1, des canaux d'écoulement d'un liquide caloporteur sont ménagés entre les nervures 221 du guide intermédiaire 1', et des canaux d'écoulement d'un autre réactif sont ménagés entre les nervures 221 du guide inférieur 1".

Lorsque les nervures 211 sont fabriquées sur une couche de diffusion gazeuse 120, les encres à base desquelles les nervures 211 ont été fabriquées peuvent avoir été avec des paramètres d'impression différents de ceux que l'on préférera adopter pour une impression sur une couche d'électrode 110 ou une plaque électriquement conductrice 130. Plus particulièrement, il est préférable dans ce cas que l'encre conductrice destinée à former les nervures 211 soit plus visqueuse que celle utilisable sur une couche d'électrode 110 ou une plaque électriquement conductrice 130, de sorte qu'elle ne puisse pas s'infiltrer dans les pores de la couche de diffusion gazeuse 120 ou que cette infiltration soit suffisamment limitée. De même, l'on pourra être conduit, pour la même raison, à choisir un élastomère présentant une viscosité maximisée. A condition donc de maîtriser les éventuels phénomènes d'infiltration de l'encre conductrice ou de l'élastomère déposé, il est possible d'obtenir, sur la couche de diffusion gazeuse 120, un guide d'écoulement 1 par mise en oeuvre d'un quelconque des modes de réalisation décrits ci-dessus.

L'invention n'est pas limitée aux modes de réalisation précédemment décrits.

La présente invention peut être appliquée à tout type de réacteurs électrochimiques nécessitant au moins un circuit fluidique, notamment pour l'amenée des réactifs et l'évacuation des produits de la réaction et/ou la circulation d'un fluide de refroidissement. Parmi ces réacteurs électrochimiques, l'on compte non seulement des piles à combustible, comme déjà mentionné plus haut, mais également, à titre d'exemple additionnel, des électrolyseurs.

Notons enfin que la présente invention permet la fabrication de circuit fluidique présentant des canaux d'écoulement fins, c'est-à-dire de largeur inférieure à 400 µm, qui ne sont pas réalisables en séries par emboutissage.

## Revendications

1. Procédé de fabrication d'au moins un guide d'écoulement (1, 1') pour réacteur électrochimique, comprenant les étapes suivantes :
• Fournir un substrat (10),
• Fournir un premier écran maillé (11) comprenant des premières ouvertures (111) configurées pour former au moins un négatif d'un premier motif (21) de nervures (211) d'un premier guide d'écoulement (1),
• Imprimer, sur une première face (101) du substrat (10), une première couche sacrificielle (31) à base d'un premier élastomère par sérigraphie à l'aide du premier écran maillé (11),
• déposer, sur la première face (101) du substrat (10), une première couche non sacrificielle (33) à base d'une première encre d'impression pour former les nervures (211) du premier guide d'écoulement (1),
• fabriquer, sur la seconde face (102) du substrat (10), un deuxième guide d'écoulement (1') comprenant des nervures (221), et
• calandrer au moins les nervures (221) du deuxième guide d'écoulement (1'), puis
• retirer la première couche sacrificielle (31).

2. Procédé selon la revendication précédente, dans lequel l'étape consistant à fabriquer, sur la seconde face (102) du substrat (10), un deuxième guide d'écoulement (1') comprend les étapes suivantes :
• Fournir un deuxième écran maillé (12) comprenant des deuxièmes ouvertures (121) configurées pour former au moins un négatif d'un deuxième motif (22) des nervures (221) du deuxième guide d'écoulement (1'),
• Imprimer, sur la seconde face (102) du substrat (10), une deuxième couche sacrificielle (32) à base d'un deuxième élastomère par sérigraphie à l'aide du deuxième écran maillé (12), et
• déposer, sur la deuxième face (102) du substrat (10), une deuxième couche non sacrificielle (34) à base d'une deuxième encre d'impression pour former les nervures (221) du deuxième guide d'écoulement (1').

3. Procédé selon la revendication précédente, dans lequel l'étape consistant à calandrer les nervures (221) au moins du deuxième guide d'écoulement (1') est réalisée avant une étape consistant à retirer la deuxième couche sacrificielle (32).

4. Procédé selon l'une quelconque des revendications précédentes, comprenant en outre, le cas échéant avant l'étape consistant à fabriquer le deuxième guide d'écoulement (1') et avant l'étape consistant à retirer la première couche sacrificielle (31), une étape consistant à calandrer les nervures (211) du premier guide d'écoulement (1).

5. Procédé selon la revendication 4, dans lequel les étapes consistant à calandrer les nervures (211) du premier guide d'écoulement (1) et à calandrer les nervures (221) du deuxième guide d'écoulement (1') sont réalisées simultanément, en une seule opération de calandrage.

6. Procédé selon la revendication 2 et l'une quelconque des deux revendications précédentes, dans lequel le premier élastomère et le deuxième élastomère présentent des caractéristiques de déformabilité sous calandrage(s) différentes de celles que présentent les nervures (211) du premier guide d'écoulement (1) et les nervures (221) du deuxième guide d'écoulement (1').

7. Procédé selon la revendication 2 et l'une quelconque des trois revendications précédentes, dans lequel le premier élastomère et le deuxième élastomère présentent des caractéristiques de déformabilité sous calandrage(s) différentes entre elles.

8. Procédé selon la revendication 2 et l'une quelconque des quatre revendications précédentes, dans lequel le premier élastomère présente une dureté différente de celle du deuxième élastomère.

9. Procédé selon la revendication 2 et l'une quelconque des cinq revendications précédentes, dans lequel la première couche sacrificielle (31) présente une épaisseur différente de celle de la deuxième couche sacrificielle (32).

10. Procédé selon la revendication précédente, dans lequel la différence d'épaisseur entre la première couche sacrificielle (31) et la deuxième couche sacrificielle (32) est paramétrée de sorte que les étapes consistant à calandrer les nervures (211) du premier guide d'écoulement (1) et à calandrer les nervures (221) du deuxième guide d'écoulement (1') aient des effets dissymétriques sur les nervures (211) du premier guide d'écoulement (1) relativement aux nervures (221) du deuxième guide d'écoulement (1') ou de sorte à retrouver une symétrie de leurs effets entre les nervures (211) du premier guide d'écoulement (1) et les nervures (221) du deuxième guide d'écoulement (1'), par exemple malgré que les premier et deuxième motifs (21 et 22) soient dissymétriques entre eux relativement à un plan d'extension principal du substrat (10).

11. Procédé selon l'une quelconque des revendications précédentes, dans lequel les ouvertures (111, 121) sont configurées pour former en outre un joint d'étanchéité non-sacrificiel (40) autour d'au moins un guide d'écoulement (1, 1') dont lesdites ouvertures (111, 121) forment le négatif.

12. Procédé selon la revendication précédente, dans lequel l'impression d'au moins une couche sacrificielle (31, 32) et le dépôt d'au moins une couche non sacrificielle (33, 34) sont configurés de telle sorte que l'épaisseur du joint d'étanchéité non-sacrificiel (40) est supérieure à la hauteur des nervures (211, 221) du guide d'écoulement (1, 1') dont les ouvertures (111, 121) forment le négatif.

13. Procédé selon l'une quelconque des revendications précédentes, dans lequel le dépôt d'au moins une couche non sacrificielle (33, 34) comprend la mise en oeuvre d'au moins une technique de dépôt parmi l'enduction, le raclage, la pulvérisation et la sérigraphie.

14. Procédé selon l'une quelconque des revendications précédentes, comprenant en outre, suite à l'étape d'impression d'au moins une couche sacrificielle (31, 32) au moins l'une parmi une étape de réticulation de la couche sacrificielle (31, 32) concernée et une étape de séchage de la couche sacrificielle (31, 32) concernée.

15. Procédé selon l'une quelconque des revendications précédentes, dans lequel au moins un élastomère comprend au moins l'un parmi :
• du silicone,
• du polyuréthane,
• du caoutchouc nitrile,
• un fluoroélastomère,
• de l'éthylène-propylène-diène monomère (EPDM), et
• un perfluoroélastomère.

16. Procédé de fabrication d'une plaque bipolaire (100) pour réacteur électrochimique, et en particulier pour pile à combustible à membrane échangeuse de protons, comprenant le procédé de fabrication selon l'une quelconque des revendications précédentes.

17. Plaque bipolaire (100) pour réacteur électrochimique obtenu par mise en oeuvre du procédé de fabrication selon la revendication 16.

## Patentansprüche

1. Verfahren zur Herstellung mindestens eines Strömungsleiters (1, 1') für elektrochemischen Reaktor, das die folgenden Schritte umfasst:
• Bereitstellen eines Substrats (10),
• Bereitstellen eines ersten Maschensiebs (11), das erste Öffnungen (111) umfasst, die dazu konfiguriert sind, mindestens ein Negativ eines erstens Musters (21) von Rippen (211) eines ersten Strömungsleiters (1) zu bilden,
• Drucken auf einer ersten Fläche (101) des Substrats (10) einer ersten Opferschicht (31) auf der Basis eines ersten Elastomers durch Siebdruck mit Hilfe des ersten Maschensiebs (11),
• Abscheiden auf der ersten Fläche (101) des Substrats (10) einer ersten Nicht-Opferschicht (33) auf der Basis einer ersten Drucktinte, um die Rippen (211) des ersten Strömungsleiters (1) zu bilden,
• Herstellen auf der zweiten Fläche (102) des Substrats (10) eines zweiten Strömungsleiters (1'), der Rippen (221) umfasst, und
• Kalandrieren mindestens der Rippen (221) des zweiten Strömungsleiters (1'), dann
• Abziehen der ersten Opferschicht (31).

2. Verfahren nach dem vorstehenden Anspruch, wobei der Schritt, der im Bilden auf der zweiten Fläche (102) des Substrats (10) eines zweiten Strömungsleiters (1') besteht, die folgenden Schritte umfasst:
• Bereitstellen eines zweiten Maschensiebs (12), das zweite Öffnungen (121) umfasst, die dazu konfiguriert sind, mindestens ein Negativ eines zweiten Musters (22) der Rippen (221) des zweiten Strömungsleiters zu bilden,
• Drucken auf der zweiten Fläche (102) des Substrats (10) einer zweiten Opferschicht (32) auf der Basis eines zweiten Elastomers durch Siebdruck mit Hilfe des zweiten Maschensiebs (12), und
• Abscheiden auf der zweiten Fläche (102) des Substrats (10) einer zweiten Nicht-Opferschicht (34) auf der Basis einer zweiten Drucktinte, um die Rippen (221) des zweiten Strömungsleiters (1') zu bilden.

3. Verfahren nach dem vorstehenden Anspruch, wobei der Schritt, der im Kalandrieren der Rippen (221) mindestens des zweiten Strömungsleiters (1') besteht, vor einem Schritt realisiert wird, der dann besteht, die zweite Opferschicht (32) abzuziehen.

4. Verfahren nach einem der vorstehenden Ansprüche, das außerdem gegebenenfalls vor dem Schritt, der im Bilden des zweiten Strömungsleiters (1') besteht, und vor dem Schritt, der im Abziehen der ersten Opferschicht (31) besteht, einen Schritt umfasst, der im Kalandrieren der Rippen (211) des ersten Strömungsleiters (1) besteht.

5. Verfahren nach Anspruch 4, wobei die Schritte, die im Kalandrieren der Rippen (211) des ersten Strömungsleiters (1) und im Kalandrieren der Rippen (221) des zweiten Strömungsleiters (1') bestehen, gleichzeitig in einem Kalandrierungsvorgang realisiert werden.

6. Verfahren nach Anspruch 2 und einem der beiden vorstehenden Ansprüche, wobei das erste Elastomer und das zweite Elastomer Verformbarkeitsmerkmale bei Kalandrierung(en) aufweisen, die von denjenigen unterschiedlich sind, welche die Rippen (211) des ersten Strömungsleiters (1) und die Rippen (221) des zweiten Strömungsleiters (1') aufweisen.

7. Verfahren nach Anspruch 2 und einem der drei vorstehenden Ansprüche, wobei das erste Elastomer und das zweite Elastomer Verformbarkeitsmerkmale bei Kalandrierung(en) aufweisen, die voneinander unterschiedlich sind.

8. Verfahren nach Anspruch 2 und einem der vier vorstehenden Ansprüche, wobei das erste Elastomer eine Härte aufweist, die von der des zweiten Elastomers unterschiedlich ist.

9. Verfahren nach Anspruch 2 und einem der fünf vorstehenden Ansprüche, wobei die erste Opferschicht (31) eine Dicke aufweist, die von der der zweiten Opferschicht (32) unterschiedlich ist.

10. Verfahren nach dem vorstehenden Anspruch, wobei der Dickenunterschied zwischen der ersten Opferschicht (31) und der zweiten Opferschicht (32) derart parametriert wird, dass die Schritte, die im Kalandrieren der Rippen (211) des ersten Strömungsleiters (1) und im Kalandrieren der Rippen (221) des zweiten Strömungsleiters (1') bestehen, asymmetrische Wirkungen auf die Rippen (211) des ersten Strömungsleiters (1) bezogen auf die Rippen (221) des zweiten Strömungsleiters (1') aufweisen, oder derart, dass eine Symmetrie ihrer Wirkungen zwischen den Rippen (211) des ersten Strömungsleiters (1) und den Rippen (221) des zweiten Strömungsleiters (1') gefunden wird, beispielsweise selbst wenn das erste und das zweite Muster (21 und 22) zueinander relativ zu einer Hauptausdehnungsebene des Substrats (10) asymmetrisch sind.

11. Verfahren nach einem der vorstehenden Ansprüche, wobei die Öffnungen (111, 121) dazu konfiguriert sind, außerdem eine Nicht-Opferdichtung (40) um mindestens einen Strömungsleiter (1, 1'), dessen Öffnungen (111, 121) das Negativ bilden, zu bilden.

12. Verfahren nach dem vorstehenden Anspruch, wobei das Drucken mindestens einer Opferschicht (31, 32) und das Abscheiden mindestens einer Nicht-Opferschicht (33, 34) derart konfiguriert sind, dass die Dicke der Nicht-Opferdichtung (40) größer ist als die Höhe der Rippen (211, 221) des Strömungsleiters (1, 1'), dessen Öffnungen (111, 121) das Negativ bilden.

13. Verfahren nach einem der vorstehenden Ansprüche, wobei die Abscheidung mindestens einer Nicht-Opferschicht (33, 34) das Umsetzen mindestens einer Abscheidungstechnik aus Beschichten, Rakeln, Sprühen und Siebdruck umfasst.

14. Verfahren nach einem der vorstehenden Ansprüche, das außerdem im Anschluss an den Druckschritt mindestens einer Opferschicht (31, 32) mindestens einen eines Vernetzungsschritts der betreffenden Opferschicht (31, 32) und eines Trocknungsschritts der betreffenden Opferschicht (31, 32) umfasst.

15. Verfahren nach einem der vorstehenden Ansprüche, wobei mindestens ein Elastomer mindestens eines umfasst von:
• Silizium,
• Polyurethan,
• Nitrilkautschuk,
• einem Fluorelastomer,
• Ethylen-Propylen-Dien-Monomer (EPDM), et
• einem Perfluorelastomer.

16. Verfahren zur Herstellung einer Bipolarplatte (100) für elektrochemischen Reaktor und insbesondere einer Brennstoffzelle mit Protonenaustauschmembran, das das Herstellungsverfahren nach einem der vorstehenden Ansprüche umfasst.

17. Bipolarplatte (100) für elektrochemischen Reaktor, die durch Umsetzung des Herstellungsverfahrens nach Anspruch 16 erhalten wird.

## Claims

1. Method for manufacturing at least one flow guide (1, 1') for an electrochemical reactor, comprising the following steps:
- Providing a substrate (10),
- Providing a first mesh screen (11) comprising first openings (111) configured to form at least one negative of a first pattern (21) of ridges (211) of a first flow guide (1),
- Printing, on a first face (101) of the substrate (10), a first sacrificial layer (31) with the basis of a first elastomer by screen printing using a first mesh screen (11),
- Depositing, on the first face (101) of the substrate (10), a first non-sacrificial layer (33) with the basis of a first printing ink to form the ridges (211) of the first flow guide (1),
- Manufacturing, on the second face (102) of the substrate (10), a second flow guide (1') comprising ridges (221), and
- Calendering at least the ridges (221) of the second flow guide (1'), then
- Removing the first sacrificial layer (31).

2. Method according to the preceding claim, wherein the step consisting of manufacturing, on the second face (102) of the substrate (10), a second flow guide (1') comprises the following steps:
- Providing a second mesh screen (12) comprising second openings (121) configured to form at least one negative of a second pattern (22) of the ridges (221) of the second flow guide (1'),
- Printing, on the second face (102) of the substrate (10), a second sacrificial layer (32) with the basis of a second elastomer by screen printing using the second mesh screen (12), and
- Depositing, on the second face (102) of the substrate (10), a second non-sacrificial layer (34) with the basis of a second printing ink to form the ridges (221) of the second flow guide (1').

3. Method according to the preceding claim, wherein the step consisting of calendering the ridges (221) at least of the second flow guide (1') is performed before a step consisting of removing the second sacrificial layer (32).

4. Method according to any one of the preceding claims, further comprising, if necessary, before the step consisting of manufacturing the second flow guide (1') and before the step consisting of removing the first sacrificial layer (31), a step consisting of calendering the ridges (211) of the first flow guide (1).

5. Method according to claim 4, wherein the steps consisting of calendering the ridges (211) of the first flow guide (1) and of calendering the ridges (221) of the second flow guide (1') are performed simultaneously, in one single calendering operation.

6. Method according to claim 2 and any one of the two preceding claims, wherein the first elastomer and the second elastomer have deformability features under calenderings different from those that the ridges (211) of the first flow guide (1) and the ridges (221) of the second flow guide (1') have.

7. Method according to claim 2 and any one of the three preceding claims, wherein the first elastomer and the second elastomer have deformability features under calenderings which are different from one another.

8. Method according to claim 2 and any one of the four preceding claims, wherein the first elastomer has a different hardness from that of the second elastomer.

9. Method according to claim 2 and any one of the five preceding claims, wherein the first sacrificial layer (31) has a thickness different from that of the second sacrificial layer (32).

10. Method according to the preceding claim, wherein the difference in thickness between the first sacrificial layer (31) and the second sacrificial layer (32) is configured such that the steps consisting of calendering the ridges (211) of the first flow guide (1) and of calendering the ridges (221) of the second flow guide (1') have dissymmetric effects on the ridges (211) of the first flow guide (1) relative to the ridges (221) of the second flow guide (1') or so as to find a symmetry of their effects between the ridges (211) of the first flow guide (1) and the ridges (221) of the second flow guide (1'), for example despite the first and second patterns (21 and 22) being dissymmetric to one another relative to a main extension plane of the substrate (10).

11. Method according to any one of the preceding claims, wherein the openings (111, 121) are configured to further form a non-sacrificial seal (40) around at least one flow guide (1, 1'), said openings (111, 121) of which form the negative.

12. Method according to the preceding claim, wherein the printing of at least one sacrificial layer (31, 32) and the deposition of at least one non-sacrificial layer (33, 34) are configured, such that the thickness of the non-sacrificial seal (40) is greater than the height of the ridges (211, 221) of the flow guide (1, 1'), the openings (111, 121) of which form the negative.

13. Method according to any one of the preceding claims, wherein the deposition of at least one non-sacrificial layer (33, 34) comprises the implementation of at least one deposition technique from among coating, scraping, spraying and screen printing.

14. Method according to any one of the preceding claims, further comprising, following the step of printing at least one sacrificial layer (31, 32) at least one from among a step of crosslinking the sacrificial layer (31, 32) in question and a step of drying the sacrificial layer (31, 32) in question.

15. Method according to any one of the preceding claims, wherein at least one elastomer comprises at least one from among:
- Silicone,
- Polyurethane,
- Nitrile rubber,
- Fluoroelastomer,
- Ethylene propylene diene monomer (EPDM), and
- Perfluoroelastomer.

16. Method for manufacturing a bipolar plate (100) for an electrochemical reactor, and in particular, for a proton exchange membrane fuel cell, comprising the manufacturing method, according to any one of the preceding claims.

17. Bipolar plate (100) for an electrochemical reactor, obtained by implementing the manufacturing method according to claim 16.
